# EUROPÄISCHE PATENTANMELDUNG

(11) **EP 1 524 617 A1**
(43) Veröffentlichungstag der Anmeldung: **20.04.2005**
(21) Anmeldenummer: 03103864.9
(22) Anmeldetag: 17.10.2003
(51) Int. Cl.: G06F 17/60, G07F 17/32, A63F 13/12

(54) **Verfahren und System, um mit einem an ein Mobilfunknetz angeschlossenen Spielterminal zu spielen**

(71) Anmelder: Swisscom Mobile AG, 3050 Bern (CH)
(72) Erfinder: Lauper, Eric, 3014 Bern (CH); Layani, Frédéric, 1006 Lausanne (CH)
(74) Vertreter: P&TS Patents & Technology Surveys SA

(57) **Zusammenfassung**

Ein System für Spiele, mit folgenden Merkmalen:
Ein Mobilfunknetz,
Mindestens ein Spielterminal mit einer Schnittstelle für das Mobilfunknetz und mindestens einer Spielanwendung,
wobei das benannte Spielterminal über ein tragbares persönliches Identifizierungsmodul verfügt,
Ein Werbeinhalt-Serversystem, um Werbeinhalte getrennt von der Spielanwendung über das benannte Mobilfunknetz an das benannte Spielterminal auszusenden,
wobei die benannte Spielanwendung derart programmiert ist, dass die benannten Werbeinhalte dem Spieler während einem Spiel wiedergegeben werden.

Die Spielanwendung ist derart programmiert, dass während dem Spiel beworbene Produkte oder Komponenten über das benannte Mobilfunknetz bestellbar sind.

## Beschreibung

Die vorliegende Erfindung betrifft ein System und ein Verfahren für elektronische Spiele in einem Mobilfunknetz.

Spielanwendungen, die man mit einem Mobilfunkendgerät spielen kann, sind an sich schon bekannt. Nebst Spielen, die beim Kauf des Endgeräts bereits installiert sind, können später auch andere Spiele gekauft und/oder ab einem Fernserver ferngeladen werden. Es sind auch on-line Spiele bekannt, die von mehreren über ein Mobilfunknetz verbundenen Spielern gespielt werden können.

EP1087312 beschreibt ausserdem ein Verfahren, um Werbeinhalte dynamisch über ein GPRS-Netzwerk ab einem Fernserver fernzuladen und dem Spieler während des Spiels wiederzugeben. Der Werbeinhalt befindet sich entweder am Bildschirmrand und/oder wird in der Spielgraphik integriert.

Es ist ein Ziel der vorliegenden Erfindung, ein verbessertes System und Verfahren für on-line Spiele anzubieten.

Es ist insbesondere ein Ziel der vorliegenden Erfindung, ein System und ein Verfahren anzubieten, welche effizientere Werbekampagnen für die Anzeiger und neue Spiel- und Bestellmöglichkeiten für die Spieler ermöglichen.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

insbesondere werden diese Ziele durch ein System erreicht für Spiele mit einem Mobilfunknetz, mindestens einem Spielterminal mit einer Schnittstelle für das Mobilfunknetz und mindestens einer Spielanwendung, wobei das benannte Spielterminal über ein tragbares persönliches Identifizierungsmodul verfügt. Ein Werbeinhalt-Serversystem ist vorgesehen, um Werbeinhalte getrennt von der Spielanwendung über das benannte Mobilfunknetz an das benannte Spielterminal auszusenden. Die Spielanwendung ist derart programmiert, dass dem Spieler während einem Spiel Werbeinhalte wiedergegeben werden und dass die beworbenen Produkte oder Komponenten während dem Spiel über das Mobilfunknetz bestellbar sind.

Dies hat den Vorteil, dass während dem Spiel beworbene Produkte direkt bestellt und sogar in elektronischer Form geliefert werden können. Auf diese Weise können insbesondere effizientere Werbekampagnen geplant werden, auf welche die Konsumenten sofort reagieren können.

Dieses Verfahren ist zum Beispiel gut geeignet, um Spielkomponenten (zum Beispiel neue Spielfiguren, anderes Zubehör, oder andere Szenarien) während einer Spielpartie zu installieren und zu erwerben, ohne die Spielpartie unterbrechen zu müssen, was insbesondere bei Spielen, an welchen mehrere Benutzer teilnehmen, unerwünscht ist.

Die vorliegende Erfindung wird mit Hilfe der als Beispiel gegebenen Beschreibung besser verständlicht und durch die beiliegenden Figuren veranschaulicht:
Die Figur 1 zeigt ein Blockschema eines Systems gemäss der Erfindung;
Die Figur 2 zeigt eine Szene eines on-line Spiels mit Werbung für Komponenten, die ferngeladen werden können;
Die Figur 3 zeigt ein anderes Bildschirmbild des on-line Spiels während dem Bestellvorgang einer Komponente.

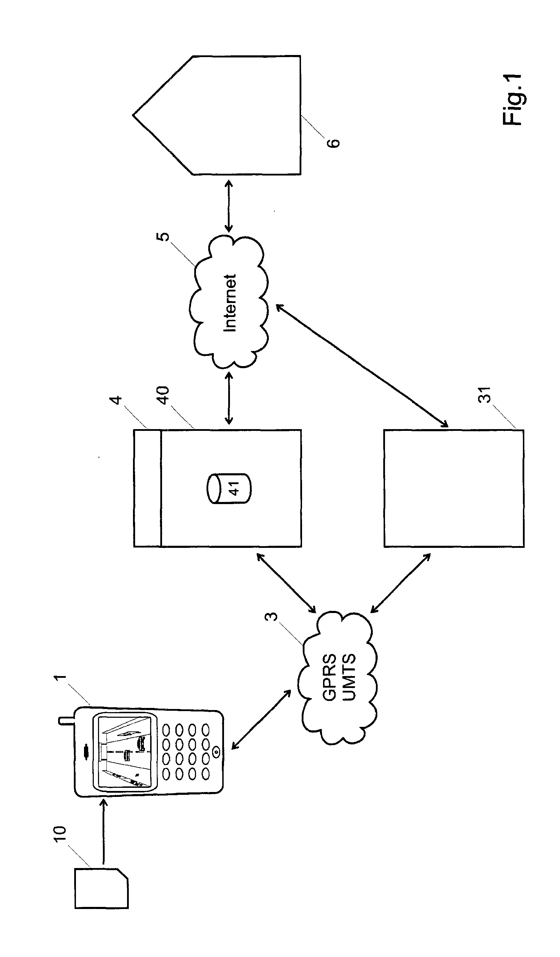

Figur 1 zeigt ein Blockschema mit den Hauptakteuren oder Komponenten des Systems. Im dargestellten Beispiel umfasst das System eine Vielzahl von Benutzern (Mobilteilnehmer, Spieler), die je über ein Mobilgerät 1 verfügen. Mit "Mobilgerät" werden in diesem Kontext sowohl tragbare Geräte gemeint als auch Geräte, die an ein Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das Identifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. In einer weiteren Variante besteht das Mobilgerät aus einem Set-Top-Box für Fernseher, aus einer Spielkonsole, oder aus einem an einem Kabelfernsehsystem angeschlossenen Gerät. Das Identifizierungsmodul 10 ist beispielsweise eine SIM-Karte.

Das Benutzer-Mobilgerät 1 kann an ein Mobilnetzwerk 3 angeschlossen werden, um Sprach- und Datenverbindungen mit anderen Geräten aufzubauen. Das Netzwerk besitzt eine Infrastruktur; mit Infrastruktur ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Router, Heimdateiregister, Verrechnungs- und Zahlungsplattformen 3, Server für vom Betreiber angebotene Mehrwertdienste usw.

Ebenfalls an das Mobilfunknetz 3 angeschlossen ist ein Werbeinhalt-Serversystem 4, um Werbeinhalte über das Mobilfunknetz 3 an das Spielterminal 1 auszusenden. Die Werbeinhalte können feste oder animierte Bilderdateien, Tondateien, multimediale Dateien, Programme, Applets, CORBA- oder SOAP-Komponenten, URL-Links usw. umfassen und werden von einer Vielzahl von werbebetreibenden Entitäten 6 bestimmt. Die werbebetreibenden Entitäten können den gewünschten auszusendenden Werbeinhalt im Serversystem 4 über ein nicht dargestelltes gesichertes Portal (zum Beispiel ein WEB-Portal, ein WAP-Portal, ein SMS-Portal, ein USSD-Händler, oder ein Sprachportal) mit einem interaktiven Spracherkennungssystem (IVR, Interactive Voice Response System) und über ein Telekommunikationsnetzwerk 5 (beispielsweise über das Internet 5 oder über das Mobilfunknetz 3) ablegen.

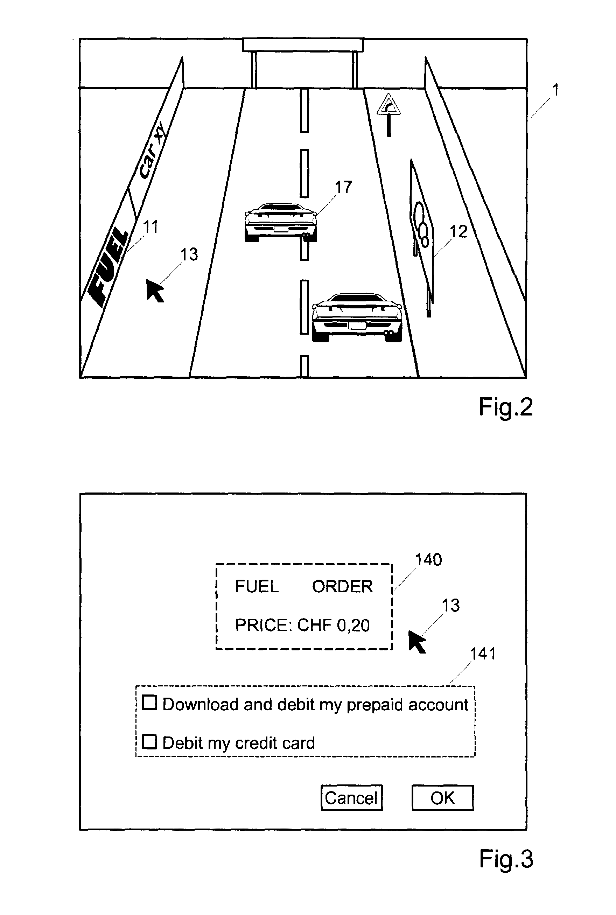

Die im Server 4 abgelegten Werbeinhalte werden getrennt von der Spielanwendung über das Mobilfunknetz 3 an das Spielterminal 1 übertragen und während dem Spielablauf dem Spieler wiedergegeben. Die Figur 2 zeigt eine Szene eines Spiels (hier eine Autorennfahrt) das mit einem Spielterminal 1 gespielt wird, beispielsweise mit einem Mobilfunktelefon oder mit einem an ein Mobilfunknetz angeschlossenes Rechnersystem. Die Szene enthält ein vom Spieler gesteuertes virtuelles Auto 17, das auf einer Strasse zwischen Werbeplakaten 11, 12 fährt. Die Werbung, die auf den Plakaten 11, 12 angezeigt wird, kommt aus dem Server 4 und wird nach der Verteilung der Spielanwendung aktualisiert. Diese Werbung kann beispielsweise in Pull-Mode beim Einschalten des Spielgeräts, bei Starten der Spielanwendung oder während dem Spiel aus dem Server 4 geholt, oder in Push-Mode jederzeit vom Server 4 an die Spielterminals gesendet werden. Ausser Werbeplakaten in einer Spielszene kann auch das von den Spielfiguren verwendete Zubehör (zum Beispiel das Auto, die Kleider usw.) mit Werbung versehen sein. Es können auch Werbinhalte am Rand des Bildes, als Tondatei während dem Spiel, als Hyperlink im Spiel, als Animation usw. wiedergegeben werden.

Werbe-Betreibende 6 können einen Sendeplan für die Verteilung ihrer Werbeinhalte im Speicherbereich 41 ablegen. Der Sendeplan kann für jeden Werbeinhalt im Server 4 ein oder mehrere Sendekriterien enthalten. Die Sendekriterien machen die Aussendung jeder Werbung von verschiedenen Ereignissen abhängig (beispielsweise von der Identität des Spielers 1, von seinem Profil (einschliesslich registriertem Interessenprofil), vom Typ, der Anzeigeauflösung und Merkmalen des Endgeräts 1, von der Zeit, vom Wochentag, vom Datum, vom Standort des Mobilgeräts 1, von früher ausgesendeter Werbung (damit nicht zweimal die gleiche Werbung gehört oder gesehen wird), vom Spielablauf (zum Beispiel vom erreichten Score) oder von expliziten Befehlen des Spielers oder der Werbe-Betreibenden. Werbung, die mit einem Sendekriterium verknüpft ist, wird erst dann ausgesendet, wenn die Kriterien erfüllt sind. Die Aussendung kann dem Werbe-Betreibenden vom Betreiber des Serversystems 4 verrechnet werden.

Auf diese Weise können beispielsweise geographisch und zeitlich eingeschränkte oder vom Konsumentenprofil abhängige Werbekampagnen geplant werden, die nur ein gezieltes Publikum von Spielern visieren. Diese Werbekampagnen werden den Werbe-Betreibenden von einer Zahlungsund Verrechnungsplattform 31 verrechnet (beispielsweise über ein bekanntes Internet- oder konventionelles Zahlungsverfahren).

Als Beispiel von Werbe-Betreibenden 6 können Vertreiber von Spielanwendungen erwähnt werden, die auf diese Weise den Spielern Spielkomponenten, Zubehör, Spielergänzungen oder neue Spielversionen anbieten wollen. Da die Werbekampagnen geographisch, zeitlich gezielt und vom Endgerätabhängig sind, können die Produkte zum richtigen Zeitpunkt, in der Sprache und Währung des Spielers und an sein Endgerät angepasst, beworben werden.

Ebenfalls im Serversystem 4 abgelegt, oder mit diesem Serversystem verbunden, befindet sich eine Datenbank 41 mit Komponenten, welche von den Werbebetreibenden 5 beworben werden. Mindestens gewisse Komponenten in der Datenbank können über das Mobilfunknetz 3 an die bestellenden Spieler übermittelt werden. Diese Komponenten umfassen beispielsweise Dateien (zum Beispiel Spielkomponenten, Bilder-, Ton- und multimediale Dateien, SoftwareProgramme) und andere Objekte, die von den Spielern während einer Partie bestellt werden können und als Datei oder über einen Streaming-Prozess über das Netz 3 an die Endgeräte 1 übermittelt werden können.

Die Figur 3 zeigt eine andere Bildschirmansicht des on-line Spiels während dem Bestellvorgang einer Komponente. Der Spieler kann vom Bildschirm der Figur 2 aus auf diesem Bildschirm gelangen, beispielsweise indem er eine der gesehenen Werbezonen mit dem Kursor 13 anklickt oder anderswie anwählt. Die Möglichkeit, eine Komponente zu bestellen, kann auch bei gewissen Spielvorgängen angeboten werden, beispielsweise am Ende einer Spielpartie, um eine weitere Folge anzubieten.

Das Spiel wird dann momentan pausiert und der Spieler hat die Möglichkeit die gewünschten Produkte oder Komponenten anzuwählen. Im dargestellten Beispiel hat er die Möglichkeit, (virtuelles) Öl für sein Spielauto für CHF 0,20 zu kaufen, mit welchem sein Auto länger und/oder schneller fahren kann. Der Spieler kann auch in einer Zone 141 entscheiden, ob diese Summe seinem vorbezahlten Geldkonto oder einem Kreditkartenkonto belastet werden soll. Die Bestellung wird einfach durch Anwählen der "OK" Taste getätigt; die gesamte Kunden-Authentifizierung und Sicherung der Transaktion wird anhand des Identifizierungsmoduls 10 durchgeführt. Nach der Bestellung wird das virtuelle Öl ferngeladen, in der Spielanwendung installiert und das Spiel kann weitergeführt werden.

Das Bestellungsprogramm ist unter anderem vorteilhaft, um Komponenten zu bestellen und fernzuladen, die den Spielablauf beeinflussen. Beispielsweise können virtuelle Spielkomponenten (zum Beispiel virtuelle Figuren, virtuelle Waffen, virtuelles Zubehör usw.) mit diesem Verfahren gekauft und installiert werden, ohne dass die Spielpartie unterbrochen werden muss.

Elektronische Komponenten, die mit diesem Verfahren bestellt und geliefert werden sollen, werden vorzugsweise vom Serversystem 4 elektronisch signiert. Die Signatur wird im Endgerät 1 automatisch geprüft so dass die ferngeladene Komponente erst dann installiert wird, wenn die Signatur akzeptiert worden ist.

Mit dem erfindungsgemässen Verfahren und System können nicht nur Komponenten aus der Datenbank 40 bestellt werden, sondern auch andere Produkte und Dienstleistungen, die eventuell auch über einen anderen elektronischen (zum Beispiel über Internet) oder physischen (zum Beispiel Post) Lieferungskanal fristlos oder verzögert an den bestellenden Spieler geliefert werden können. Als Beispiel könnten auch Bücher, T-Shirts, Spielfiguren, usw. während einer Spielpartie bestellt werden.

Die übermittelten Produkte oder Komponenten können vorzugsweise automatisch an den Spieler angepasst werden. Die Version eines auf diese Weise bestellten neuen Programms kann beispielsweise automatisch an die Sprache des Spielers und an die Spezifikationen seines Endgeräts 1 angepasst werden. Ähnlicherweise kann der verrechnete Preis und die Rechnungsart automatisch an den momentanen Standort, den üblichen Standort, das Profil und die Präferenzen des Spielers angepasst werden.

Im Rahmen der Erfindung können den an die Identifizierungskarte 10 gebundenen Geldkonten auch Beträge gutgeschrieben werden (zum Beispiel mit Spielgewinne, die von einem anderen Spieler oder von einem Spielanbieter 6 ausbezahlt werden). Der Geldbetrag auf mindestens einem der Geldkonten des Spielterminals 1 ist somit abhängig vom Spielverlauf der Spielanwendung in diesem Terminal, aber auch in Terminals anderer Spieler. Dies ist vor allem dann vorteilhaft, wenn mehrere Spieler miteinander (beziehungsweise gegeneinander) mehrere Spielpartien über das Mobilfunknetz 3 spielen. Wenn die Spielanwendung einem Wettbewerb zwischen mehreren Spielern entspricht, kann somit der Geldbetrag vom Rang des Spielers in diesem Wettbewerb abhängig sein.

Die Spielanwendung im Endgerät ist vorzugsweise derart programmiert, dass der Spieler das Geldkonto, das je nach Verlauf des Spiels belastet oder nachgeladen wird, im Voraus oder kurz vor der Geldübertragung bestimmen kann. Es können beispielsweise Prepaid- oder Postpaid Geldkonten des Mobilfunknetzes 3, in welchem das Identifizierungsmodul 10 registriert ist, und/oder Debitkonten, Kreditkonten und Wertkonten von anderen Finanzdienstleistungsanbietern verwendet werden. Das Geldkonto ist jedoch vorzugsweise an das Identifizierungsmodul 10 gebunden. In einem GSM-Netzwerk kann das Geldkonto somit mit der IMSI (International Mobile Subscriber Identity) und/oder mit dem MSISDN (Mobile System ISDN) der SIM-Karte 10 identifiziert werden. Sind mehrere Geldkonten an ein einziges Identifizierungsmodul gebunden, kann ein zusätzliches Feld das bei der Transaktion verwendete Geldkonto identifizieren.

Vorzugsweise kann ausserdem ein Ausgabelimit pro Spielpartie oder pro Zeitperiode im Voraus vom Spieler und/oder von Dritten festgelegt werden. Als weitere Sicherheitsmassnahme können ausserdem mindestens gewisse benannte Geldkonten standortabhängig gesperrt sein, so dass Geldspiele nur innerhalb eines bestimmten geographischen Gebiets möglich sind.

Erfindungsgemäss können Spielermannschaften auch dynamisch gebildet werden (zum Beispiel abhängig vom Standort der Spieler). Zu diesem Zweck werden alle mobilen Spieler, die sich momentan in einem geographischen Gebiet befinden, automatisch vom Serversystem zu einer Mannschaft zusammengeschlossen, die dann in einem on-line Spiel gegen eine andere Mannschaft spielen kann. Andere Kriterien um Spieler in Mannschaften einzuteilen, sind im Rahmen der Erfindung auch denkbar. Die Utensilien (zum Beispiel die Wagen in einem Rennlauf oder die T-Shirts in einem Fussballspiel) können dann von webebetreibenden Entitäten 6 gesponsert werden.

Der Anfang und/oder das Ende einer Spielpartie kann automatisch ferngesteuert für mehrere Spieler von einem Spieler oder vom Server 4 bestimmt werden.

## Patentansprüche

1. Ein System für Spiele, mit folgenden Merkmalen:
Ein Mobilfunknetz (3),
Mindestens ein Spielterminal (1) mit einer Schnittstelle für das Mobilfunknetz und mindestens einer Spielanwendung,
wobei das benannte Spielterminal über ein tragbares persönliches Identifizierungsmodul (10) verfügt,
Ein Werbeinhalt-Senrersystem (4), um Werbeinhalte getrennt von der Spielanwendung über das benannte Mobilfunknetz an den benannten Spielterminal (1) auszusenden,
wobei die benannte Spielanwendung derart programmiert ist, dass die benannten Werbeinhalte dem Spieler während eines Spiels wiedergegeben werden,
**dadurch gekennzeichnet, dass** die benannte Spielanwendung derart programmiert ist, dass während dem Spiel beworbene Produkte oder Komponenten (40) über das benannte Mobilfunknetz (3) bestellbar sind.

2. Das System des Anspruchs 1, in welchem das benannte Identifizierungsmodul (10) mindestens ein Geldkonto zugewiesen ist,
wobei die benannte Spielanwendung derart programmiert ist, dass der Geldbetrag auf mindestens einem der benannten Geldkonten vom Spielverlauf abhängig ist.

3. Das System des Anspruchs 2, in welchem die benannte Spielanwendung derart programmiert ist, dass der Geldbetrag auf mindestens einem der benannten Geldkonten belastet wird, nachdem während dem Spiel beworbene Produkte oder Komponenten (40) über das benannte Mobilfunknetz (3) bestellt wurden.

4. Das System eines der Ansprüche 2 bis 3, in welchem die benannte Spielanwendung derart programmiert ist, dass das benannte Geldkonto automatisch mit Spielgewinnen nachgeladen wird.

5. Das System eines der Ansprüche 1 bis 4, in welchem die benannte Spielanwendung derart programmiert ist, dass im Spiel beworbene Produkte oder Komponenten (40) bestellbar sind ohne die Spielpartie zu verlassen.

6. Das System eines der Ansprüche 2 bis 5, mit einer Vielzahl von benannten Spielterminals (1),
wobei die benannte Spielanwendung derart programmiert ist, dass mehrere Spieler über das benannte Mobilfunknetz (3) mehrere Spielpartien miteinander beziehungsweise gegeneinander spielen können,
und wobei die benannte Spielanwendung derart programmiert ist, dass der Geldbetrag auf mindestens einem der benannten Geldkonten eines des Spielterminals vom Spielverlauf der Spielanwendung in mindestens einem anderen Spielterminal (1) abhängig ist.

7. Das System des Anspruchs 6, in welchem die benannte Spielanwendung ein Wettbewerb zwischen mehreren Spielern ist, und in welchem der benannte Geldbetrag vom Rang des Spielers im benannten Wettbewerb abhängig ist.

8. Das System eines der Ansprüche 2 bis 7, in welchem die benannte Spielanwendung derart programmiert ist, dass der Spieler das benannte Geldkonto, das je nach Spielverlauf belastet oder nachgeladen wird, bestimmen kann.

9. Das System eines der Ansprüche 1 bis 8, in welchem die benannte Spielanwendung derart programmiert ist, dass pro Spielpartie beziehungsweise pro Zeitperiode eine Ausgabelimite festgelegt wird.

10. Das System des Anspruchs 9, in welchem die benannte Ausgabelimite vom Spieler im Voraus bestimmt wird.

11. Das System des Anspruchs 9, in welchem die benannte Ausgabelimite von Drittparteien bestimmt wird.

12. Das System eines der Ansprüche 2 bis 11, in welchem die benannten Geldkonten unter anderem ein Prepaid- oder Postpaid Geldkonto des Mobilfunknetzes umfassen, in welchem die benannten Identifizierungsmodule (10) registriert sind.

13. Das System eines der Ansprüche 2 bis 11, in welchem die benannten Geldkonten Debitkonten, Kreditkonten und Wertkonten umfassen.

14. Das System eines der Ansprüche 2 bis 13, in welchem die benannte Spielanwendung derart programmiert ist, dass aus einem Fernserver ferngeladene Komponenten während einer Spielpartie bestellt und durch Belastung des benannten Geldkontos bezahlt werden können.

15. Das System des Anspruchs 14, in welchem die benannten Komponenten (40) den Spielablauf beeinflussen.

16. Das System des Anspruchs 15, in welchem die benannten Komponenten (40) virtuelle Spielkomponenten umfassen, zum Beispiel virtuelle Figuren, virtuelle Waffen, virtuelles Zubehör usw.

17. Das System eines der Ansprüche 14 bis 16, in welchem die benannten ferngeladenen Komponenten (40) signiert sind und erst dann installiert werden, wenn die elektronische Signatur akzeptiert wird.

18. Das System eines der Ansprüche 1 bis 17, in welchem die benannten Werbeinhalte, die in einem Spielterminal (1) ferngeladen werden, vom Standort des Spielterminals (1) abhängig sind.

19. Das System eines der Ansprüche 1 bis 18, in welchem die benannten Werbeinhalte, die in einem Spielterminal (1) ferngeladen werden, vom Profil oder den Präferenzen des Spielers abhängig sind.

20. Das System eines der Ansprüche 1 bis 19, in welchem die benannten Werbeinhalte, die in einem Spielterminal (1) ferngeladen werden, vom erreichten Score des Spielers im Spiel abhängig sind.

21. Das System eines der Ansprüche 1 bis 19, in welchem die benannten Werbeinhalte, die im Werbeinhalt-Serversystem (4) und im Spielterminal (1) ferngeladen werden, dynamisch von Drittparteien (6) aktualisierbar sind.

22. Das System eines der Ansprüche 2 bis 21, in welchem mindestens gewisse benannte Geldkonten standortabhängig gesperrt sind.

23. Das System eines der Ansprüche 1 bis 22, in welchem Spielmannschaften dynamisch zusammengestellt werden.

24. Das System des Anspruchs 23, in welchem Spielmannschaften dynamisch in Abhängigkeit vom Standort der Spieler zusammengestellt werden.

25. Das System eines der Ansprüche 1 bis 24, in welchem der Anfang und/oder das Ende einer Spielpartie automatisch ferngesteuert für mehrere Spieler bestimmt wird.

26. Ein Verfahren, um mit einem an ein Mobilfunknetz (3) angeschlossenen Spielterminal (1) zu spielen, mit folgenden Verfahrenschritten:
Ein Werbeinhalt-Serversystem (4) sendet Werbeinhalte über das benannte Mobilfunknetz (3) an das benannte Spielterminal (1) getrennt von der Spielanwendung aus,
die benannten Werbeinhalte werden dem Spieler während einem Spiel wiedergegeben,
**dadurch gekennzeichnet, dass** beworbene Produkte oder Komponenten (40) während dem Spiel über das benannte Mobilfunknetz (3) bestellt werden.

27. Das Verfahren des Anspruchs 26, in welchem die benannten Produkte oder Komponenten während dem Spiel und ohne dass die benannte Spielanwendung verlassen wird bestellt werden.

28. Das Verfahren des Anspruchs 27, in welchem die benannten Produkte oder Komponenten während dem Spiel und ohne dass die benannte Spielanwendung verlassen wird durch das benannte Mobilfunknetz (3) ferngeladen und in das benannte Spielterminal installiert werden.

29. Das Verfahren eines der Ansprüche 26 bis 28, in welchem die benannten Produkte oder Komponenten (40) durch Belastung von mindestens einem an eine mit dem Spielterminal (1) verbundene Identifizierungskarte (10) gebundenen Geldkontos bezahlt werden.

30. Das Verfahren eines der Ansprüche 26 bis 29, in welchem die benannten Werbeinhalte vom Standort des Spielterminals abhängig sind.

31. Ein Serversystem (4) mit folgenden Komponenten:
Ein Anschluss an ein Telekommunikationsnetz (3),
Eine Sammlung (41) von Werbedateien, die zur Integration in Videospielen bestimmt sind,
Eine Verbindung mit einem Verrechnungszentrum (31), um bestellte Produkte oder Dienstleistungen zu verrechnen.

32. Das Serversystem des Anspruchs 31, mit einem Sendeplaner, um die Sendung der benannten Werbedateien in Abhängigkeit von Ereignissen zu planen.
